# EUROPEAN PATENT SPECIFICATION

(11) **EP 2 661 658 B1**
(45) Date of publication and mention of the grant of the patent: **25.09.2019**
(21) Application number: 11854624.1
(22) Date of filing: 03.01.2011
(51) Int. Cl.: G06F 1/00

(54) **INTEGRATED CIRCUIT DEVICE AND METHOD FOR PERFORMING CONDITIONAL NEGATION OF DATA**
INTEGRIERTE SCHALTVORRICHTUNG UND VERFAHREN ZUR DURCHFÜHRUNG VON BEDINGTER DATENNEGATION
DISPOSITIF DE CIRCUIT INTÉGRÉ ET PROCÉDÉ POUR EFFECTUER UNE NÉGATION CONDITIONNELLE DE DONNÉES

(43) Date of publication of application: 13.11.2013
(73) Proprietor: NXP USA, Inc., Austin TX 78735 (US)
(72) Inventor: MOSKOVICH, Ilia, 82091 Kiriat-Gat (IL); AIDAN, Fabrice, 47292 Ramat Hasharon (IL); GAL, Avi, 43519 Ranana (IL); LACHOVER, Dmitry, 58459 Holon (IL)
(74) Representative: Bradler, Carola Romana
(86) International application number: PCT/IB2011/050002
(87) International publication number: WO 2012/093288

(56) References cited:
- EP-A2- 1 267 256
- JP-A- S5 837 746
- US-A- 5 465 374
- US-A- 5 964 825
- US-A1- 2002 184 643
- US-A1- 2003 226 002
- US-A1- 2008 059 551

## Description

### Field of the invention

The field of this invention relates to an integrated circuit device and method for performing conditional negation of data stored within a data register of a digital signal processing (DSP) device.

### Background of the invention

Digital Signal Processor (DSP) applications are becoming increasingly more demanding in their requirements of DSP cores. For example, the increased data rates specified for the fourth generation (4G) of mobile telecommunication systems require significantly higher DSP performance. One of the key operations performed by a DSP within such 4G mobile telecommunication systems is the descrambling of received bits.

The scrambling operation performed on data bits that are to be transmitted comprises performing a bit-wise XOR (exclusive OR) operation between the data bits to be transmitted and a given sequence of 'scrambling' bits. Upon subsequent receipt of the data, it is necessary to reverse the process by performing a further bit-wise XOR operation between the received scrambled data bits and the same given sequence of scrambling bits. As will be appreciated by a skilled artisan, the received data is no longer represented in bits, but rather represented as a log-likelihood ratio (LLR) value, which typically comprises a one-byte "soft value". The equivalent of performing an XOR operation on such an LLR value is to negate the LLR value (in cases where the equivalent transmitted bit is a logical "1"). Thus, a conditional negation of each received LLR value is required to be performed whereby, for each received LLR value, if the corresponding bit value within the sequence of scrambling bits comprises a logic '1' the LLR value is negated, whilst if the corresponding bit value within the sequence of scrambling bits comprises a logic '0' the LLR value remains un-negated.

In order to perform such conditional negation of an LLR value using traditional DSP implementations, it is necessary for the application program code to comprise an 'if' statement that results in a 'change of flow' in the application program code. To improve the overall throughput of DSPs, a pipelined architecture is typically implemented in order to reduce the overall number of cycles per instruction, and thereby improve the throughput of the DSP. However, a change of flow, such as may result from the use of an 'if' statement, effectively voids any benefit provided by such a pipelined architecture for that part of the application program code, significantly reducing the efficiency of the DSP. In addition, the use of an 'if' statement to perform a conditional negation of an LLR value may prevent more than one conditional negation operation being performed per cycle in the case of a limited number of available predicate bits, irrespective of the ability of the processing parallelism within DSP architecture. Furthermore, extracting the scrambling bit sequence required for performing the descrambling operation consumes DSP cycles.

Since such conditional negations of an LLR value may be required to be performed on a regular basis within a mobile telecommunication receiver, such a reduction in the efficiency of the DSP for performing such operations can have a significant effect on the overall performance of the DSP. Us 5 964 825 describes a general purpose microprocessor architecture enabling more efficient computations of a type in which Boolean operations and arithmetic operations conditioned on the results of the Boolean operations are interleaved.

### Summary of the invention

The present invention provides an integrated circuit device and method for performing conditional negation of data stored within a data register of a digital signal processing (DSP) device, as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified block diagram of an example of part of a DSP module.
FIG. 2 illustrates a simplified example of a data execution unit module executing a conditional negation instruction.
FIG. 3 illustrates an example of conditional negation instructions being executed in parallel.
FIG's 4 and 5 illustrates simplified flowcharts of an example of a method for performing conditional negation of data.

### Detailed description

Examples of the present invention will now be described with reference to an example of a digital signal processor (DSP) architecture. However, it will be appreciated that the present invention is not limited to the specific DSP architecture herein described with reference to the accompanying drawings, and may equally be applied to alternative DSP architectures. For the illustrated example, a DSP architecture is provided comprising separate data and address registers. However, it is contemplated in some examples that separate address registers need not be provided, with data registers being used to provide address storage. Furthermore, for the illustrated examples, the DSP architecture is shown as comprising four data execution units. Some examples of the present invention may equally be implemented within a DSP architecture comprising any number of data execution units. Additionally, because the illustrated example embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

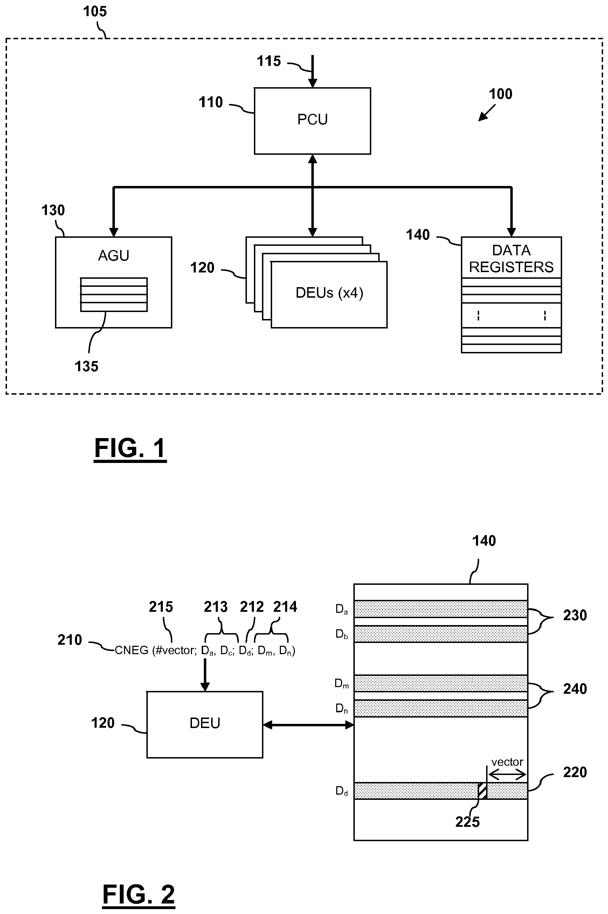

Referring first to FIG. 1, there is illustrated a simplified block diagram of an example of part of a DSP module 100 adapted in accordance with some example embodiments of the present invention. For the illustrated example, the DSP module 100 forms a part of an integrated circuit device, illustrated generally at 105, and comprises at least one program control unit (PCU) 110, one or more data execution unit (DEU) modules 120, at least one address generation unit (AGU) 130 and a plurality of data registers, illustrated generally at 140. The PCU 110 is arranged to receive DSP instructions, as illustrated generally at 115, and to cause an execution of operations within the DSP module 100 in accordance with the received DSP instructions. For example, the PCU 110 may receive a DSP instruction, for example stored within an instruction buffer (not shown), where the received DSP instruction requires one or more operations to be performed on one or more bits/bytes/words/etc. of data. A data 'bit' typically refers to a single unit of binary data comprising either a logic '1' or logic '0', whilst a 'byte; typically refers to a block of 8 bits. A data 'word' may comprise one or more bytes of data, for example two bytes (16 bits) of data, depending on the particular DSP architecture. Upon receipt of such a DSP instruction, the PCU 110 generates and outputs instructions and/or control signals to the various other components within the DSP module 100 in order for the required operations to be performed. The AGU 130 is arranged to generate address values for accessing system memory, and may comprise one or more address registers as illustrated generally at 135. The data registers 140 provide storage for fetched from system memory, and on which one or more operations is/are to be performed, and from which data may be written to system memory. The DEU modules 120 are arranged to perform operations on data (either provided directly thereto or stored within the data registers 140) in accordance with instructions and control signals received from the PCU 110. As such, the DEU modules 120 may comprise arithmetic logic units (ALUs), etc. As previously mentioned, DSP applications may require a conditional negation of a data value to be performed, whereby a data value is to be negated (or not) depending on a specific bit value.

In accordance with some example embodiments of the present invention, one or more of the DEU modules 120 may be arranged to execute a conditional negation instruction whereby, upon receipt of such a conditional negation instruction, such a DEU module 120 is arranged to retrieve one or more conditional bit values from a first data register based at least partly on a conditional bit vector, and conditionally perform negation of target data within at least one further data register according to the retrieved conditional bit value(s). FIG. 2 illustrates a simplified example of a DEU module 120 executing such a conditional negation instruction. For the illustrated example, the DEU module 120 receives a conditional negation instruction 210, for example from the PCU 115, comprising a first data register identifier 212, identifying a first data register 220 containing one or more conditional bit values 225. The conditional negation instruction 215 further comprises a second data register identifier 213 identifying at least a second data register containing target data on which the conditional negation is to be performed. For the illustrated example, the second data register identifier 213 identifies two data registers (Dₐ and D_{b}) illustrated generally at 230 containing target data on which the conditional negation is to be performed. The conditional negation instruction 210 illustrated in FIG. 2 further comprises a third data register identifier 214 identifying at least a third data register into which the DEU module 120 is to store the result of the conditional negation operation. For the illustrated example, the second data register identifier 214 identifies two data registers (Dₘ and Dₙ) illustrated generally at 240 containing target data on which the conditional negation is to be performed. It is contemplated that this third data register identifier may be omitted, with the DEU module 120 simply storing the result of the conditional negation operation in, say, the second data register(s) 230, thereby overwriting (or if no negation is to be performed simply maintaining) the original target data.

By providing a dedicated instruction for performing conditional negation in this manner, the need for the application program code to comprise 'if' statements, in order to perform conditional negation of a value, may be substantially alleviated. In this manner, the associated problems of changes of flow within the code that would have a detrimental impact on the efficiency of the DSP module 100 are also substantially alleviated. In particular, by substantially removing a presence of changes of flow within the application program code for performing such a conditional negation operation, the benefits afforded by any pipelining within the architecture of the DSP module 100 may be taken advantage of.

As described above and illustrated in FIG. 2, for the conditional negation operation herein described, the negation is performed based on one or more conditional bit values 225 located within a data register 230. For the example illustrated in FIG. 2, the conditional negation instruction 210 further comprises a conditional bit vector 215 indicating a specific position (i.e. bit) within the first data register 220 at which the conditional bit value(s) 225 is/are located. Thus, the DEU module 120 may be arranged to retrieve the conditional bit value(s) 225 from the first data register 220 in accordance with the conditional bit vector 215.

In this manner, by performing a negation operation based on a conditional bit value located within a data register, the conditional bit may be loaded from, say, system memory (not shown) using standard load/store mechanisms, for example within a fetch cycle of the pipeline for DSP module 100. This is in contrast to, say, typical 'if' statement conditional operations that utilise dedicated condition flags within, for example, a condition code register (not shown), and that require a preceding operation to be executed in advance in order to set the condition flag to the required conditional value. Furthermore, because the conditional negation operation of examples of the present invention utilises a conditional bit value located within a data register, there is substantially no limitation on the ability for multiple conditional negation operations to be performed in parallel, thereby enabling parallel processing abilities of the DSP module 100 to be taken advantage of when performing such operations.

Referring back to FIG. 2, a DEU module 120 may be arranged to receive a conditional negation instruction comprising a general format of:
***CNEG.4W* #*vector; Da,Db; Dc; Dm,Dn***
Where:
**CNEG.4W** represents an operational code for the DEU module 120 indicating that conditional negation operations are to be performed on four data words;
**#vector** represents a conditional bit vector seed value;
**Da** and **Db** represent register identifiers for data registers in which the data words on which conditional negation operations are to be performed are stored;
**Dc** represents a register identifier for a data register in which conditional bit values are stored; and
**Dm** and **Dn** represent register identifiers for data registers in which the results of the conditional negation operations are to be stored.

Four conditional bit values, illustrated generally at 325, are located within four consecutive bits of the first data register 220. In this manner, a separate conditional bit value is available for each of the four conditional negation operations to be performed. For the illustrated example, each data register comprises, say, a 32-bit data register comprising two 16-bit register sections. Furthermore, for the illustrated example, each block of data on which a conditional negation operation is to be performed comprises a 16-bit word. Accordingly, for the illustrated example, the four data words on which the conditional negation operation is to be performed may be stored within two data registers, illustrated generally at 330, 335, one data word being stored within each of the 16-bit register sections therefor, illustrated generally at 332, 334, 336, 338. Similarly, the results of the four conditional negation operations may be stored within two data registers, illustrated generally at 340, 345, one result being stored within each of the 16-bit register sections therefor, illustrated generally at 342, 344, 346, 348.

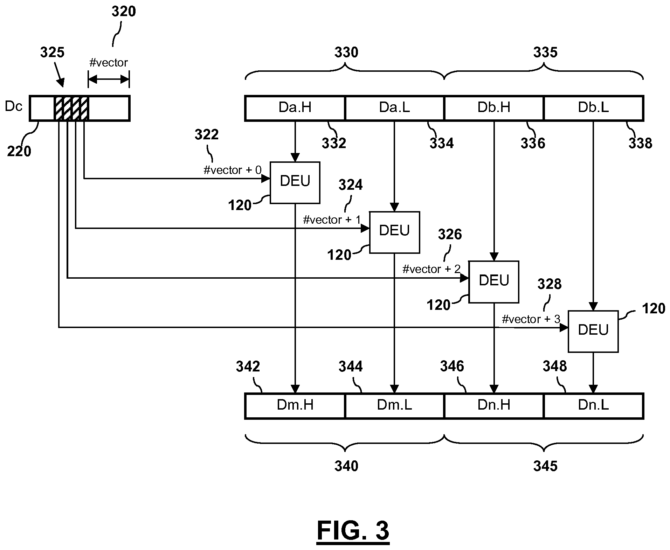

As mentioned above, the DEU module 120 may be arranged to extract a conditional bit vector seed value (#vector) and generate four conditional bit vector values (one for each negation operation) based on the conditional bit vector seed value (#vector). For the example illustrated in FIG. 3, the conditional bit vector seed value (#vector) is illustrated at 320 and represents an address location of a first conditional bit value within the first data register 220. Thus, the DEU module 120 may generate a first conditional bit vector value 322 comprising the conditional bit vector seed value (#vector) (e.g. with an offset of zero), and retrieve a first conditional bit value from the first data register 220 in accordance with the first conditional bit vector value 322, conditionally perform negation of target data block within the first register section 332 in accordance with the retrieved first conditional bit value, and store the result in the register section 342.

Within the same PCU cycle, the DEU module 120 may generate second, third and fourth conditional bit vector values 324, 326, 328, comprising, for the illustrated example, sequential increments of the conditional bit vector seed value (#vector). For example, the second conditional bit vector value 324 may comprise the conditional bit vector seed value (#vector) with an offset of '1'; the third conditional bit vector value 326 may comprise the conditional bit vector seed value (#vector) with an offset of '2'; and the fourth conditional bit vector value 328 may comprise the conditional bit vector seed value (#vector) with an offset of '3'. In this manner, the DEU module 120 is able to, within the same PCU execution cycle, retrieve second, third and fourth conditional bit values from the first data register 220 in accordance with the second, third and fourth conditional bit vector values 324, 326, 328. The DEU module 120 is further able to, within the same PCU execution cycle, conditionally perform negation of target data blocks within second, third and fourth register sections 334, 336, 338 of data registers 330, 335 in accordance with the retrieved second, third and fourth conditional bit values 324, 326, 328, and store the results in the register sections 344, 346, 348 of data registers 340, 345.

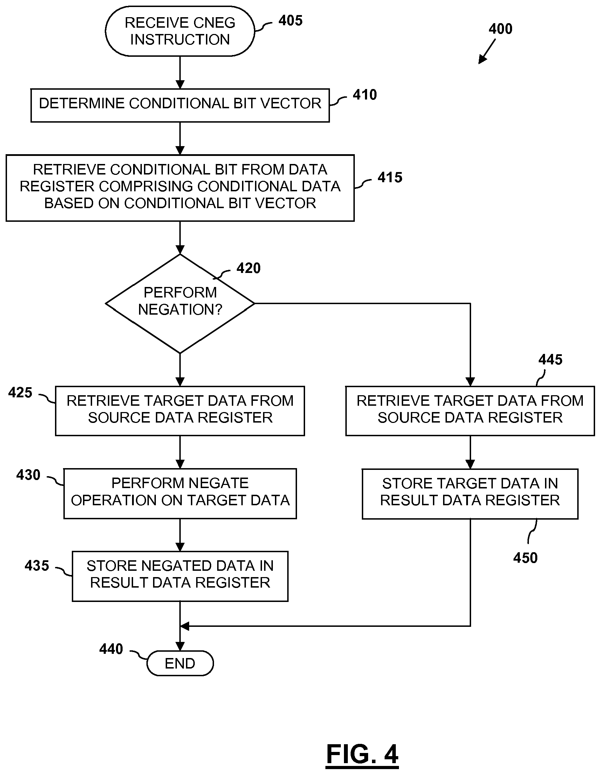

Thus, for the illustrated example, a DEU module 120 is able to perform multiple (e.g. in this illustrated example up to four) conditional negation operations within a single PCU execution cycle. Furthermore, and referring back to FIG. 1, the DSP module 100 comprises a plurality of DEU modules 120, and in particular for the illustrated example four DEU modules 120. Thus, for the example illustrated in FIG. 4, a conditional negation instruction may be provided substantially simultaneously to, and executed substantially simultaneously by, each DEU module 120, thereby enabling, for the illustrated example, up to sixteen (four per DEU module) conditional negation operations to be performed within a single PCU execution cycle.

For the example illustrated in FIG. 3, and described above, a single conditional negation instruction received by a DEU module 120 may require up to four conditional negation operations to be performed (e.g. on four 16-bit data words stored within two 32-bit data registers). However, other example embodiments may be implemented using a different architecture and possibly differing numbers of conditional negation operations. For example, for alternative example embodiments of the present invention, a single conditional negation instruction may require, say, up to eight conditional negation operations to be performed, for example on eight 8-bit bytes of data stored within two 32-bit data registers. Alternatively, a single conditional negation instruction may require, say, up to two conditional negation operations to be performed, for example on two 16-bit data words stored within a single 32-bit data register.

In some examples, the data values on which the conditional negation operations are to be performed, together with the conditional bit values, may be loaded into their respective data registers standard load/store mechanisms. Accordingly, the data values on which the conditional negation operations are to be performed, together with the conditional bit values, may be loaded into their respective data registers during one or more fetch cycles within the pipeline of the DSP module 100. In this manner, the conditional negation operations may be performed within a single execution cycle of the DSP module 100. Thus, for the illustrated example, up to four such conditional negation operations may be performed in a single execution cycle within the pipeline of the DSP module 100. This is in contrast to conventional mechanisms for performing such conditional negation operations which not only require multiple lines of application program code to perform such an operation (as opposed to a single instruction), but also require multiple execution cycles of the DSP module to perform a single conditional negation operation. Furthermore, they are also typically unable to take advantage of pipelines within the DSP architecture due to changes of flow, and are unable to be performed in parallel due to the use of dedicated conditional flags.

Referring now to FIG. 4, there is illustrated a simplified flowchart 400 of part of an example of a method for performing conditional negation of data stored within a data register of a DSP device according to some example embodiments of the present invention, for example as may be implemented within one or more of the DEUs 120 of the DSP module 100 of FIG. 1. The method starts at step 405, with a receipt of a conditional negation instruction, for example within a DEU 120 of the DSP module 100. Next, at step 410, a conditional bit vector is determined. For example, such a conditional bit vector may be determined by extracting a conditional bit vector value from the received conditional negation instruction. A conditional bit value is then retrieved from a first data register based on the determined conditional bit vector, as shown in step 415. The method then moves on to step 420, where it is determined whether or not to perform negation of target data based on the value of the retrieved conditional bit. For example, if the conditional bit comprises, say, a logic '1', negation of the target data is to be performed. Conversely, if the conditional bit comprises, say, a logic '0', negation of the target data is not to be performed. Accordingly, if it is determined that negation is to be performed, the method moves on to step 425 where target data to be negated is retrieved from a second data register.

Negation of the target data is then performed at step 430. For example, in a case of a signal processing system employing a 2's complement representation for negative numbers, the operation of negating a binary value may comprise inverting each bit of the binary value and adding '1' to the inverted value. The result of the negation is then stored at step 435, for example in a third data register thereby preserving the original data. However, in other examples, the result of the negation may equally be stored within the second data register from which the target data was retrieved, in order to reduce the number of data registers required for implementing the method. The method then ends at step 440.

Referring back to step 420, if it is determined that negation is not to be performed, the method moves on to step 445 where the target data is retrieved from the second data register, and simply stored un-negated in the third data register at step 450, and the method ends at step 440. Conversely, in other examples, where the result of the conditional negation is to be stored in the same data register in which the target data is located (e.g. in the second data register for the above example), if it is determined that negation is not to be performed at step 420, the method may simply move straight to step 440 and end.

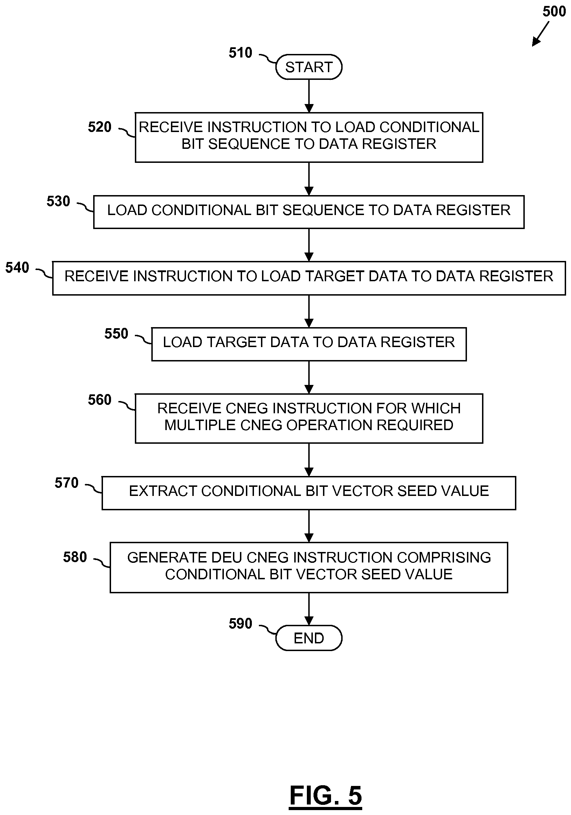

FIG. 5 illustrates a simplified flowchart 500 of a further part of an example of a method for performing conditional negation of data stored within a data register of a DSP device according to some example embodiments of the present invention, for example as may also be implemented within the PCU module 110 of the DSP module 100 of FIG. 1. The method starts at step 510, and moves on to step 520 with a receipt of an instruction to load conditional bit data into a first data register. The conditional bit data is subsequently loaded into the first data register in response to the received instruction at step 530. For example, the PCU module 110 of FIG. 1 may cause the AGU 130 to generate an address in system memory as defined within the received instruction, and at which the conditional bit data is stored. The AGU may then set the configured address on an address bus to cause the conditional bit data to be fetched from the system memory, and then loaded into the first data register. Next, at step 540, an instruction to load target data into one or more further data registers is received. The target data is subsequently loaded into the one or more further data registers in response to the received instruction at step 550. A DSP conditional negation instruction is then received at step 560, for which one or more conditional negation operations is/are required. A conditional bit vector seed value is then extracted from the received DSP conditional negation instruction at step 570, along with one or more data register identifiers for the first and at least one further data registers. One or more DEU conditional negation instructions are then generated at step 580, where each DEU conditional negation instruction comprises a conditional bit vector value seed based at least partly on the extracted conditional bit vector seed value, along with data register identifiers for the first and at least one further data register. The method then ends at step 590.

In the foregoing specification, the invention has been described with reference to specific examples of embodiments of the invention. It will, however, be evident that various modifications and changes may be made therein without departing from the broader scope of the invention as set forth in the appended claims.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Although specific conductivity types or polarity of potentials have been described in the examples, it will be appreciated that conductivity types and polarities of potentials may be reversed.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Furthermore, the terms "assert" or "set" and "negate" (or "de-assert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. For example, for clarity the PCU module 110, AGU 130, DEU modules 120 and data registers 140 have been illustrated as comprising substantially discrete logical elements within the DSP module 100. However it will be appreciated that such functional elements may be provided within any suitable distribution of physical modules.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediary components. Likewise, any two components so associated can also be viewed as being "operably connected", or "operably coupled", to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an", as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an". The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. An integrated circuit device (105) comprising at least one digital signal processor (DSP) module (100), the at least one DSP module (100) comprising a first data register and at least one further data register (140) and at least one data execution unit (DEU) module (120) arranged to execute operations on target data stored within the first data register and the at least one further data register (140);
**characterized in that** the at least one DEU module (120) is arranged, upon receipt of a conditional negation instruction (210), said conditional negation instruction (210) being an instruction to perform a conditional negation of a data value, to:
retrieve at least one conditional bit value (225, 325) from the first data register (220); and
conditionally perform negation of target data within the at least one further data register (230) according to the retrieved at least one conditional bit value (225, 325),
wherein the at least one DEU module (120) is further arranged, upon receipt of the conditional negation instruction (210), to:
extract a conditional bit vector seed value (320) from the received conditional negation instruction (210);
generate a plurality of conditional bit vector values (322, 324, 326, 328) based at least partly on the conditional bit vector seed value (320);
retrieve a plurality of conditional bit values (225, 325) from the first data register (220) in accordance with the plurality of conditional bit vector values (322, 324, 326, 328); and
conditionally perform negation of a plurality of target data blocks (332, 324, 326, 328) within the at least one further data register (230) according to the retrieved conditional bit values (225, 325).

2. The integrated circuit device (105) of Claim 1 wherein the conditional negation instruction (210) comprises a conditional bit vector (215), and the at least one DEU module (120) is arranged to retrieve the at least one conditional bit value (225, 325) from the first data register (220) in accordance with the conditional bit vector (215).

3. The integrated circuit device (105) of Claim 1 or Claim 2 wherein the at least one DEU module (120) is arranged to determine whether negation of the target data is to performed based on the at least one retrieved conditional bit value (225, 325) within the first data register (220).

4. The integrated circuit device (105) of Claim 3 wherein if it is determined that negation of the target data is to be performed, the at least one DEU module (120) is arranged to retrieve the target data from a second data register (230), perform negation of the retrieved target data, and store the result of the negation in a third data register (240).

5. The integrated circuit device (105) of Claim 3 wherein if it is determined that the negation of the target data is not to be performed, the at least one DEU module (120) is arranged to retrieve the target data from a second data register (230), and store the target data un-negated in the third data register (240).

6. The integrated circuit device (105) of any preceding Claim wherein the at least one DSP module (100) further comprises a plurality of DEU modules (122, 124, 126, 128) arranged to execute conditional negation instructions (210) substantially simultaneously.

7. A method (400, 500) for performing conditional negation of data stored within a data register of a digital signal processing (DSP) device, the method comprising, upon receipt of a conditional negation instruction within at least one data execution unit (DEU) module of the DSP device (405), wherein said conditional negation instruction (210) is an instruction to perform a conditional negation of a data value:
retrieving at least one conditional bit value from a first data register based on a conditional bit vector (415); and
conditionally performing negation of target data within at least one further data register according to the retrieved at least one conditional bit value (430),
wherein the method further comprises, upon receipt of the conditional negation instruction (210):
extracting a conditional bit vector seed value (320) from the received conditional negation instruction (210);
generating a plurality of conditional bit vector values (322, 324, 326, 328) based at least partly on the conditional bit vector seed value (320);
retrieving a plurality of conditional bit values (225, 325) from the first data register (220) in accordance with the plurality of conditional bit vector values (322, 324, 326, 328); and
conditionally performing negation of a plurality of target data blocks (332, 324, 326, 328) within the at least one further data register (230) according to the retrieved conditional bit values (225, 325).

8. The method (400, 500) of Claim 7 wherein retrieving at least one conditional bit value from a first data register based on a conditional bit vector (415) comprises retrieving the at least one conditional bit value (225) from the first data register (220) in accordance with the conditional bit vector (415).

9. The method (400, 500) of Claim 7 or Claim 8 further comprising determining whether negation of the data is to performed based on the at least one retrieved conditional bit value (225) within the first data register (220).

10. The method (400, 500) of Claim 9 wherein if it is determined that negation of the target data is to be performed, the method further comprises, at the at least one DEU module (120):
retrieving target data from a second data register (230),
performing negation of the retrieved target data, and
storing the result of the negation in a third data register (240).

11. The method (400, 500) of Claim 9 wherein if it is determined that negation of the target data is not to be performed, the method further comprises, at the at least one DEU module (120):
retrieving target data from a second data register (230); and
storing the target data un-negated in the third data register (240).

## Patentansprüche

1. Eine integrierte Schaltkreisvorrichtung (105), aufweisend
zumindest ein digitales Signalverarbeitung (DSP) Modul (100),
wobei das zumindest eine DSP Modul (100) aufweist
ein erstes Datenregister und
zumindest ein weiteres Datenregister (140) und
zumindest ein Daten Ausführungseinheit (DEU) Modul (120), welches eingerichtet ist zum Ausführen von Operationen auf Zieldaten, die gespeichert sind innerhalb des ersten Datenregisters und des zumindest einen weiteren Datenregisters (140);
**dadurch gekennzeichnet, dass** das zumindest eine DEU Modul (120) eingerichtete ist, nach einem Empfang von einer bedingten Negationsinstruktion (210),
wobei die bedingte Negationsinstruktion (210) eine Instruktion ist zum Durchführen einer bedingten Negation von einem Datenwert, zum:
Empfangen von zumindest einem bedingten Bitwert (225, 325) von dem ersten Datenregister (220);
bedingten Durchführen von Negation von Zieldaten innerhalb des zumindest einen weiteren Datenregisters (230) gemäß dem abgerufenen zumindest einen bedingten Bitwert (225, 325),
wobei das zumindest eine DEU Modul (120) ferner eingerichtet ist, nach einem Empfang von der bedingten Negationsinstruktion (210), zum:
Extrahieren eines bedingten Bitvektor Seed Wert (320) von der empfangenen bedingten Negationsinstruktion (210);
Generieren einer Mehrzahl von bedingten Bitvektor Werten (322, 324, 326, 328) basierend zumindest teilweise auf dem bedingten Bitvektor Seed Wert (320);
Abrufen einer Mehrzahl von bedingten Bitwerten (225, 325) von dem ersten Datenregister (220) in Übereinstimmung mit der Mehrzahl von bedingten Bitvektor Werten (322, 324, 326, 328); und
bedingtes Durchführen von Negation von einer Mehrzahl von Ziel Datenblöcken (332, 324, 326, 328) innerhalb des zumindest einen weiteren Datenregisters (230) gemäß den abgerufenen bedingten Bitwerten (225, 325).

2. Die integrierte Schaltkreisvorrichtung (105) gemäß Anspruch 1,
wobei die bedingte Negationsinstruktion (210) aufweist einen bedingten Bitvektor (215) und das zumindest eine DEU Modul (120) eingerichtet ist zum Abrufen des zumindest einen bedingten Bitwertes (225, 325) von dem ersten Datenregister (220) in Übereinstimmung mit dem bedingten Bitvektor (215).

3. Die integrierte Schaltkreisvorrichtung (105) gemäß Anspruch 1 oder Anspruch 2,
wobei das zumindest eine DEU Modul (120) eingerichtet ist zum Bestimmen, ob die Negation von den Zieldaten durchzuführen ist basierend auf dem zumindest einen abgerufenen bedingten Bitwert (225, 325) innerhalb des ersten Datenregisters (220).

4. Die integrierte Schaltkreisvorrichtung (105) gemäß Anspruch 3,
wobei, wenn es bestimmt wird, dass die Negation von den Zieldaten durchzuführen ist, das zumindest eine DEU Modul (120) eingerichtet ist zum Abrufen der Zieldaten von einem zweiten Datenregister (230), zum Durchführen der Negation von den abgerufenen Zieldaten, und zum Speichern des Ergebnisses von der Negation in einem dritten Datenregister (240).

5. Die integrierte Schaltkreisvorrichtung (105) gemäß Anspruch 3,
wobei, wenn es bestimmt wird, dass die Negation von den Zieldaten nicht durchzuführen ist, das zumindest eine DEU Modul (120) eingerichtet ist zum Abrufen der Zieldaten von einem zweiten Datenregister (230) und zum Speichern der Zieldaten unnegiert in den dritten Datenregister (240).

6. Die integrierte Schaltkreisvorrichtung (105) gemäß irgendeinem vorherigen Anspruch,
wobei das zumindest eine DSP Modul (100) ferner aufweist eine Mehrzahl von DEU Modulen (122, 124, 126, 128), welche eingerichtet sind zum Ausführen von bedingten Negationsinstruktionen (210) im Wesentlichen simultan.

7. Ein Verfahren (400, 500) zum Durchführen von bedingter Negation von Daten, welche gespeichert sind innerhalb eines Datenregisters von einer digitalen Signalverarbeitung (DSP) Vorrichtung,
das Verfahren aufweisend,
nach einem Empfang von einer bedingten Negationsinstruktion innerhalb zumindest einem Daten Ausführungseinheit (DEU) Modul von der DSP Vorrichtung (405),
wobei die bedingte Negationsinstruktion (210) eine Instruktion ist zum Durchführen einer bedingten Negation von einem Datenwert:
Abrufen von zumindest einem bedingten Bitwert von einem ersten Datenregister basierend auf einem bedingten Bitvektor (415); und
bedingtes Durchführen von Negation von Zieldaten innerhalb zumindest eines weiteren Datenregisters gemäß dem abgerufenen zumindest einen bedingten Bitwert (430), wobei das Verfahren ferner aufweist, nach dem Empfang von der bedingten Negationsinstruktion (210):
Extrahieren eines bedingten Bitvektor Seed Wertes (320) von der empfangenen bedingten Negationsinstruktion (210);
Generieren einer Mehrzahl von bedingten Bitvektor Werten (322, 324, 326, 328) basierend zumindest teilweise auf dem bedingten Bitvektor Seed Wert (320);
Abrufen einer Mehrzahl von bedingten Bitwerten (225, 325) von dem erste Datenregister (220) in Übereinstimmung mit der Mehrzahl von bedingten Bitvektor Werten (322, 324, 326, 328); und
bedingtes Durchführen von Negation von einer Mehrzahl von Ziel Datenblöcken (332, 324, 326, 328) innerhalb des zumindest einen weiteren Datenregisters (230) gemäß der abgerufenen bedingten Bitwerte (255, 325).

8. Das Verfahren (400, 500) gemäß Anspruch 7,
wobei das Abrufen von zumindest einem Bitwert von einem ersten Datenregister basierend auf einem bedingten Bitvektor (415) aufweist Abrufen des zumindest einen bedingten Bitwertes (225) von dem ersten Datenregister (220) in Übereinstimmung mit dem bedingten Bitvektor (415).

9. Das Verfahren (400, 500) gemäß Anspruch 7 oder Anspruch 8, ferner aufweisend
Bestimmen, ob die Negation von den Daten durchzuführen ist basierend auf zumindest einem abgerufenen bedingten Bitwert (225) innerhalb des ersten Datenregisters (220).

10. Das Verfahren (400, 500) gemäß Anspruch 9,
wobei, wenn es bestimmt wird, dass die Negation von den Zieldaten durchzuführen ist, das Verfahren ferner aufweist, bei dem zumindest einen DEU Modul (120):
Abrufen von Zieldaten von einem zweiten Datenregister (230),
Durchführen von Negation von den abgerufenen Zieldaten, und
Speichern des Ergebnisses von der Negation in einem dritten Datenregister (240).

11. Das Verfahren (400, 500) gemäß Anspruch 9,
wobei, wenn es bestimmt wird, dass die Negation von den Zieldaten nicht durchzuführen ist, das Verfahren ferner aufweist, bei dem zumindest einen DEU Modul (120):
Abrufen von Zieldaten von einem zweiten Datenregister (230); und
Speichern der Zieldaten unnegiert in dem dritten Datenregister (240).

## Revendications

1. Dispositif de circuit intégré (105) comprenant au moins un module (100) de processeur de signal numérique (DSP), ledit au moins un module DSP (100) comprenant un premier registre de données et au moins un registre de données supplémentaire (140) et au moins un module (120) d'unité d'exécution de données (DEU), agencé pour exécuter des opérations sur des données cible stockées dans le premier registre de données et ledit au moins un registre de données supplémentaire (140) ;
**caractérisé en ce que** ledit au moins un module DEU (120) est agencé, à la réception d'une instruction de négation conditionnelle (210), ladite instruction de négation conditionnelle (210) étant une instruction pour effectuer une négation conditionnelle d'une valeur de données, pour :
récupérer au moins une valeur binaire conditionnelle (225, 325) dans le premier registre de données (220) ; et
effectuer de manière conditionnelle une négation de données cible dans ledit au moins un registre de données supplémentaire (230) selon ladite au moins une valeur binaire conditionnelle (225, 325) récupérée,
dans lequel ledit au moins un module DEU (120) est en outre agencé, à la réception de l'instruction de négation conditionnelle (210), pour :
extraire une valeur de départ de vecteur binaire conditionnel (320) à partir de l'instruction de négation conditionnelle (210) reçue ;
générer une pluralité de valeurs de vecteur binaire conditionnel (322, 324, 326, 328) sur la base au moins en partie sur la valeur de départ de vecteur binaire conditionnel (320) ;
récupérer une pluralité de valeurs binaires conditionnelles (225, 325) du premier registre de données (220) selon la pluralité de valeurs de vecteur binaire conditionnel (322, 324, 326, 328) ; et
effectuer de manière conditionnelle une négation d'une pluralité de blocs de données cible (332, 324, 326, 328) dans ledit au moins un registre de données supplémentaire (230) selon les valeurs binaires conditionnelles (225, 325) récupérées.

2. Dispositif de circuit intégré (105) selon la revendication 1, dans lequel l'instruction de négation conditionnelle (210) comprend un vecteur binaire conditionnel (215), et ledit au moins un module DEU (120) est agencé pour récupérer ladite au moins une valeur binaire conditionnelle (225, 325) du premier registre de données (220) selon le vecteur binaire conditionnel (215).

3. Dispositif de circuit intégré (105) selon la revendication 1 ou 2, dans lequel ledit au moins un module DEU (120) est agencé pour déterminer si la négation des données cible doit être effectuée sur la base de ladite au moins une valeur binaire conditionnelle (225, 325) récupérée dans le premier registre de données (220).

4. Dispositif de circuit intégré (105) selon la revendication 3, dans lequel, s'il est déterminé que la négation des données cible doit être effectuée, ledit au moins un module DEU (120) est agencé pour récupérer les données cible d'un deuxième registre de données (230), pour effectuer une négation des données cible récupérées, et pour stocker le résultat de la négation dans un troisième registre de données (240).

5. Dispositif de circuit intégré (105) selon la revendication 3, dans lequel, s'il est déterminé que la négation des données cible ne doit pas être effectuée, ledit au moins un module DEU (120) est agencé pour récupérer les données cible d'un deuxième registre de données (230), et pour stocker les données cible non inversées dans le troisième registre de données (240).

6. Dispositif de circuit intégré (105) selon l'une quelconque des revendications précédentes, dans lequel ledit au moins un module DSP (100) comprend en outre une pluralité de modules DEU (122, 124, 126, 128) agencés pour exécuter des instructions de négation conditionnelle (210) de manière substantiellement simultanée.

7. Procédé (400, 500) pour effectuer une négation conditionnelle de données stockées dans un registre de données d'un dispositif de traitement de signal numérique (DSP), le procédé comprenant, à la réception d'une instruction de négation conditionnelle dans au moins un module d'unité d'exécution de données (DEU) du dispositif DSP (405), ladite instruction de négation conditionnelle (210) étant une instruction pour effectuer une négation conditionnelle d'une valeur de données, les étapes consistant à :
récupérer au moins une valeur binaire conditionnelle d'un premier registre de données sur la base d'un vecteur binaire conditionnel (415) ; et
effectuer de manière conditionnelle une négation de données cible dans au moins un registre de données supplémentaire selon ladite au moins une valeur binaire conditionnelle (430) récupérée,
dans lequel le procédé comprend en outre, à la réception de l'instruction de négation conditionnelle (210), les étapes consistant à :
extraire une valeur de départ de vecteur binaire conditionnel (320) de l'instruction de négation conditionnelle (210) reçue ;
générer une pluralité de valeurs de vecteur binaire conditionnel (322, 324, 326, 328) sur la base au moins en partie de la valeur de départ de vecteur binaire conditionnel (320) ;
récupérer une pluralité de valeurs binaires conditionnelles (225, 325) du premier registre de données (220) selon la pluralité de valeurs de vecteur binaire conditionnel (322, 324, 326, 328) ; et
effectuer de manière conditionnelle une négation d'une pluralité de blocs de données cible (332, 324, 326, 328) dans ledit au moins un registre de données supplémentaire (230) selon les valeurs binaires conditionnelles (225, 325) récupérées.

8. Procédé (400, 500) selon la revendication 7 dans lequel la récupération d'au moins une valeur binaire conditionnelle d'un premier registre de données sur la base d'un vecteur binaire conditionnel (415) comprend la récupération de ladite au moins une valeur binaire conditionnelle (225) du premier registre de données (220) selon le vecteur binaire conditionnel (415).

9. Procédé (400, 500) selon la revendication 7 ou 8, comprenant en outre la détermination si une négation des données doit être effectuée sur la base de ladite au moins une valeur binaire conditionnelle (225) récupérée dans le premier registre de données (220).

10. Procédé (400, 500) selon la revendication 9, dans lequel, s'il est déterminé que la négation des données cible doit être effectuée, le procédé comprend en outre, au niveau dudit au moins un module DEU (120) :
la récupération de données cible d'un deuxième registre de données (230),
l'exécution d'une négation des données cible récupérées, et
le stockage du résultat de la négation dans un troisième registre de données (240).

11. Procédé (400, 500) selon la revendication 9, dans lequel, s'il est déterminé que la négation des données cible ne doit pas être effectuée, le procédé comprend en outre, au niveau dudit au moins un module DEU (120) :
la récupération de données cible d'un deuxième registre de données (230) ; et
le stockage des données cible non inversées dans le troisième registre de données (240).
